# EUROPÄISCHE PATENTANMELDUNG

(11) **EP 1 354 517 A1**
(43) Veröffentlichungstag der Anmeldung: **22.10.2003**
(21) Anmeldenummer: 02012597.7
(22) Anmeldetag: 06.06.2002
(51) Int. Cl.: A22B 5/00

(54) **Vorrichtung und Verfahren zum Entfernen von BSE-Risikomaterial**

(30) Priorität: 18.04.2002 DE 10217195
(71) Anmelder: BVS Beratung-Verkauf-Service für die Fleischwirtschaft GmbH, 55270 Ober-Olm (DE)
(72) Erfinder: Kreis, Armin, 55270 Klein-Winternheim (DE)
(74) Vertreter: Luderschmidt, Schüler & Partner GbR

(57) **Zusammenfassung**

Die Erfindung betrifft eine Vorrichtung und ein Verfahren zum Entfernen von BSE-Risikomaterial, insbesondere des Rückenmarkkerns und der Rückenmarkhaut aus dem Rückenmarkkanal von Schlachttierkörpern. Die Vorrichtung verfügt über ein motorisch angetriebenes Schneidwerkzeug 2, insbesondere ein konischer Hohlkörper 2a mit einer ringförmigen Schneidklinge 2c, die in einem Gehäuse drehbar gelagert ist, in dem ein Saugkanal 16 ausgebildet ist, an den eine Unterdruck erzeugende Absaugeinrichtung 6 angeschlossen ist. Der Saugkanal ist derart ausgebildet, daß von dem Schlachttierkörper gelöstes BSE-Risikomaterial erst in den Saugkanal angesaugt wird, bevor das Risikomaterial mit dem Schneidwerkzeug von dem Schlachttierkörper vollständig abgetrennt und über den Saugkanal abgesaugt wird.

## Beschreibung

Die Erfindung betrifft eine Vorrichtung zum Entfernen von BSE-Risikomaterial, insbesondere des Rückenmarkkerns und der Rückenmarkhaut aus dem Rückenmarkkanal von Schlachttierkörpern. Darüber hinaus betrifft die Erfindung ein Verfahren zum Entfernen von BSE-Risikomaterial.

Bei der Schlachtung wird der Schlachttierkörper (Großvieh) der Länge nach halbiert, und anschließend werden sämtliche Innereien entnommen. Außerdem werden weitere nicht verwendbare Weichteile aus dem Tierkörper entfernt, bevor dieser der Weiterverarbeitung zugeführt wird. Zur Entfernung der Innereien und der nicht verwendbaren Weichteile finden im allgemeinen Messer, Schaber oder dgl. Verwendung. Nachteilig ist, daß dieser Vorgang sehr zeitaufwendig und mühsam ist. Ferner fallen die entfernten Teile oft zu Boden, von wo sie aus Gründen der Betriebssicherheit und Hygiene immer wieder aufgehoben und in speziellen Behältern entsorgt werden müssen.

Der Rückenmarkkern und die den Rückenmarkkanal auskleidende Rückenmarkhaut stellen ein BSE-Risikomaterial (SRM) dar. Daher ist nach den Forderungen der Veterinärmedizin bei der Schlachtung von der Länge nach halbiertem Großvieh der Rückenmarkkanal sowohl von dem Rückenmark als auch der Rückenmarkhaut rückstandslos zu befreien.

Es ist bekannt, BSE-Risikomaterial mit einem abgewinkelten Stahl vom Schlachttierkörper abzutrennen. Dabei handelt es sich zwar um ein Verfahren, das kein aufwendiges Werkzeug erfordert, nachteilig ist jedoch, daß eine rückstandslose Entfernung des Risikomaterials nur unter großem Arbeitsaufwand möglich ist.

Die DE 197 29 711 beschreibt eine Vorrichtung zum Entfernen des Rückenmarkkerns und der Rückenmarkhaut aus dem Rückenmarkkanal eines Schlachttierkörpers, die über ein motorisch angetriebenes Fräswerkzeug verfügt. Über eine Absaugeinrichtung werden die mit dem Fräswerkzeug fein zerkleinerten Gewebeteile einem Sammelbehälter zugeführt. Die bekannte Vorrichtung erlaubt zwar eine rückstandslose Entfernung des BSE-Risikomaterials mit verhältnismäßig geringem Arbeitsaufwand. Das Ausfräsen des Rückenmarkkanals zur kontaminationsfreien Entfernung von BSE-Risikomaterial ist wegen der verhältnismäßig hohen Geräte- und Wartungskosten aber relativ kostspielig. Im übrigen ist der Kraftaufwand bei der Handhabung der Geräte aufgrund ihres verhältnismäßig hohen Gewichts relativ groß.

Aus der DE 44 30 473 ist eine Vorrichtung zum Schneiden von Fleisch oder Fett mit einer ringförmigen, motorisch angetriebenen Schneidklinge bekannt. Die Vorrichtung verfügt über eine Absaugeinrichtung, um die abgetrennten Teile direkt einem Sammelbehälter zuführen zu können. Die Schneidklinge ist drehbar in einem ringförmigen Klingengehäuse gelagert, in das ein rohrförmiges Gehäuseteil zum Anschluß der Absaugeinrichtung eingesetzt ist. Zum Schneiden von Fleisch oder Fett wird die rotierende Schneidklinge in das Fleisch bzw. Fett hineingedrückt. Die herausgeschnittenen Fleisch- bzw. Fetteile werden dann abgesaugt und dem Sammelbehälter zugeführt. Grundsätzlich kann diese Vorrichtung nicht nur zum Herausschneiden von Fleisch- bzw. Fettstücken verwandt werden, sondern kann auch zur Entfernung von BSE-Risikomaterial aus dem Rückenmarkkanal eines Schlachttierkörpers eingesetzt werden. Nachteilig ist jedoch, daß eine rückstandsfreie Entfernung des Risikomaterials mit der bekannten Vorrichtung erschwert ist. Allerdings sind die Geräte- und Wartungskosten im Vergleich zu den bekannten Geräten zum Ausfräsen des Rückenmarkkanals verhältnismäßig gering.

Der Erfindung liegt die Aufgabe zu Grunde, eine betriebssicher arbeitende Vorrichtung zu schaffen, die eine rückstandslose Entfernung von BSE-Risikomaterial, insbesondere des Rückenmarkkerns und der Rückenmarkhaut aus dem Rückenmarkkanal von Schlachttierkörpern in kurzer Zeit ohne großen Arbeitsaufwand mit verhältnismäßig geringen Geräte- und Wartungskosten erlaubt.

Eine weitere Aufgabe der Erfindung ist, ein Verfahren zum rückstandslosen Entfernen von BSE-Risikomaterial in verhältnismäßig kurzer Zeit ohne großen Arbeitsaufwand anzugeben, das sich mit relativ geringen Geräte- und Wartungskosten durchführen läßt.

Die Lösung dieser Aufgaben erfolgt mit den im Patentanspruch 1 bzw. 10 angegebenen Merkmalen.

Das Verfahren beruht darauf, daß vom Schlachttierkörper gelöstes BSE-Risikomaterial erst angesaugt wird, bevor das Risikomaterial mit einem Schneidwerkzeug von dem Schlachttierkörper vollständig abgetrennt und abgesaugt wird. Vorzugsweise wird das BSE-Risikomaterial in einen Saugkanal angesaugt und mit einem Schneidwerkzeug abgetrennt, das eine ringförmige Schneidklinge aufweist. Das Ansaugen des gelösten, aber noch nicht vollständig abgetrennten Risikomaterials hat den Vorteil, daß das gesamte Risikomaterial von dem Schneidwerkzeug erfaßt wird. Dadurch ist sichergestellt, daß keine Rückstände von Risikomaterial zurückbleiben. Entscheidend ist, daß die Saugkraft ausreichend hoch ist, um nicht nur bereits vollständig abgetrenntes Risikomaterial absaugen, sondern auch nur von dem Schlachttierkörper gelöstes Risikomaterial ansaugen zu können. Darüber hinaus ist ausgeschlossen, daß BSE-Risikomaterial auf den Boden fällt, so daß Kontaminationen des Umfeldes ausgeschlossen sind.

Bei der Vorrichtung zum Entfernen von BSE-Risikomaterial ist der Saugkanal derart ausgebildet, daß von dem Schlachttierkörper gelöstes BSE-Risikomaterial erst in den Saugkanal angesaugt wird, bevor das Risikomaterial mit dem Schneidwerkzeug von dem Schlachttierkörper vollständig abgetrennt und über den Saugkanal abgesaugt wird. Dies kann in vorteilhafter Weise dadurch erreicht werden, daß der Saugkanal zur Erhöhung des Unterdrucks eine Querschnittsverringerung aufweist. Der Querschnitt des Saugkanals ist vorzugsweise um 40 bis 60 % verringert. Vorzugsweise liegt der Querschnitt des Saugkanals zwischen 12 bis 14 mm. Grundsätzlich kann aber auch die Leistung der den Unterdruck erzeugenden Absaugeinrichtung erhöht werden. Dieser Leistungserhöhung sind aber in der Praxis Grenzen gesetzt.

Bei einer besonders bevorzugten Ausführungsform weist das Gehäuse einen Ansaugstutzen, in dem der Saugkanal ausgebildet ist, und einen Anschlußstutzen für den Verbindungsschlauch der Absaugeinrichtung auf. Das Schneidwerkzeug ist vorteilhafterweise ein konischer Hohlkörper mit einer ringförmigen Schneidklinge, wodurch das BSE-Risikomaterial besser angesaugt wird. Ansaug- und Anschlußstutzen sind vorzugsweise in einem rohrförmigen Gehäusekörper ausgebildet. Der rohrförmige Gehäusekörper ist vorzugsweise in einen ringförmigen Gehäusekörper eingesetzt, in dem die Schneidklinge drehbar gelagert ist. In dem ringförmigen Gehäusekörper ist der rohrförmige Gehäusekörper vorzugsweise lösbar fixiert. Damit ist eine einfache und schnelle Montage bzw. Demontage möglich, so daß die Einzelteile einer gründlichen Reinigung zugänglich sind. Die hohen hygienischen Anforderungen in der fleischverarbeitenden Industrie lassen sich somit erfüllen.

Mit der erfindungsgemäßen Vorrichtung bzw. dem erfindungsgemäßen Verfahren kann sämtliches BSE-Risikomaterial, beispielsweise Gewebe, Haut, Flexen, Restbestände von Knochen- und Fettmehl zusammen mit Wasser- und Blutresten sowie Ganglien-(Gan)Nervenstränge entfernt werden.
Im folgenden wird die Erfindung anhand eines Ausführungsbeispiels unter Bezugnahme auf die Zeichnungen näher erläutert.

Es zeigen:

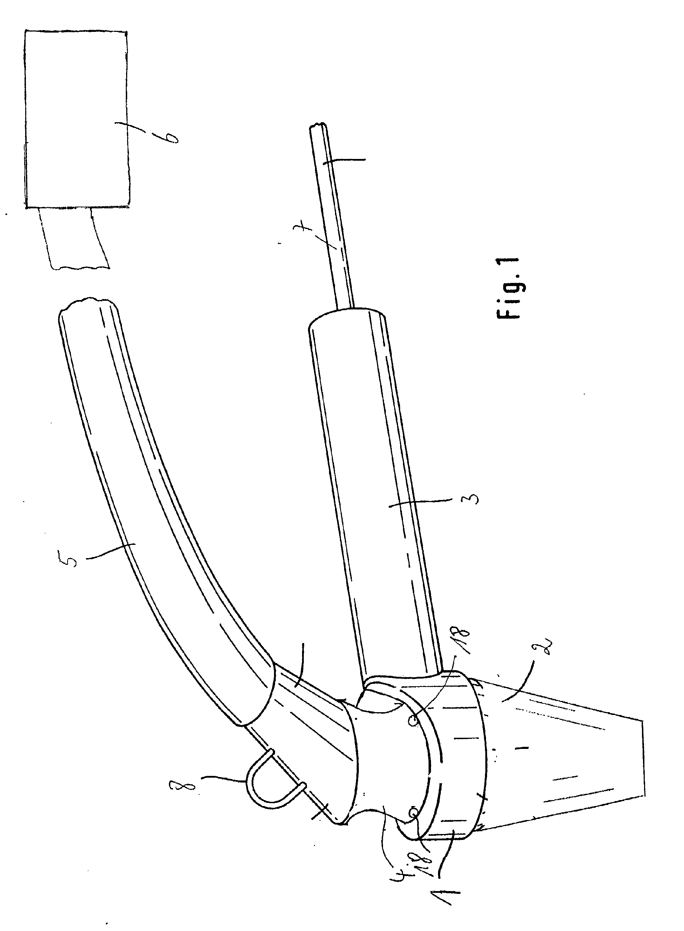

- Figur 1: ein Ausführungsbeispiel der Vorrichtung zum Entfernen von BSE-Risikomaterial in perspektivischer Darstellung und
- Figur 2: einen Teilschnitt durch den Gehäusekörper in vergrößerter Darstellung.

Die Vorrichtung zum Entfernen von BSE-Risikomaterial weist einen ringförmigen Gehäusekörper 1 auf, in dem ein Schneidwerkzeug 2 drehbar gelagert ist. An den ringförmigen Gehäusekörper 1 schließt sich seitlich ein rohrförmiger Handgriff 3 an. In den ringförmigen Gehäusekörper 1 ist ein rohrförmiger Gehäusekörper 4 eingesetzt, an den ein flexibler Verbindungsschlauch 5 angeschlossen ist, der zu einer nur schematisch dargestellten Absaugeinrichtung 6 führt. Das Netzkabel 7 der elektrisch betriebenen Vorrichtung ist aus dem Handgriff 3 herausgeführt. Die Vorrichtung kann an einem Haken 8 aufgehängt werden, der an dem rohrförmigen Gehäusekörper 4 vorgesehen ist.

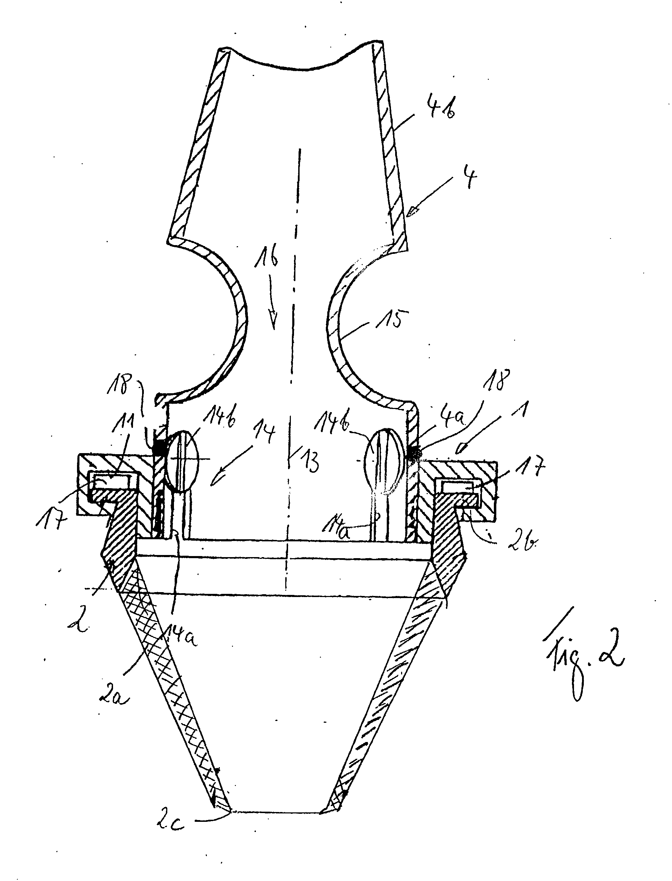

Nähere Einzelheiten sind in Figur 2 zu erkennen, die einen Schnitt durch den rohrförmigen und ringförmigen Gehäusekörper 1, 4 sowie das Schneidwerkzeug 2 zeigt. Das Schneidwerkzeug 2 weist einen kegelstumpfförmigen Hohlkörper 2a mit einer ringförmigen Schneidklinge 2c am unteren Ende und einem umlaufenden Flansch 2b am oberen Ende auf, der in einer Innennut 11 des ringförmigen Gehäusekörpers 1 drehbar gelagert ist. Die Öffnung am unteren Ende des Hohlkörpers 2a hat einen Durchmesser von 12 bis 14 mm. Während des Betriebs der Vorrichtung rotiert das Schneidwerkzeug um die Klingenachse 13. Das Schneidwerkzeug 2 wird von einem nicht dargestellten Elektromotor angetrieben, auf dessen Antriebswelle ein nicht dargestellter Zahnkranz sitzt, die mit einem Außengewinde 17 an dem Flansch 10 des Schneidwerkzeugs 2 in Eingriff ist. Elektromotor und Zahnkranz sind im Handgriff 3 angeordnet. Der motorische Antrieb des Schneidwerkzeugs kann nicht nur mittels eines Elektromotors, sondern auch mittels hydraulischer und pneumatischer Motorantriebe erfolgen.

Der rohrförmige Gehäusekörper 4 ist in den ringförmigen Gehäusekörper 1 eingesetzt, wobei der rohrförmige Gehäusekörper 4 mittels Befestigungselementen 14 lösbar in dem ringförmigen Gehäusekörper 1 fixiert ist. Als Befestigungselemente dienen in Schlitzen 14a sitzende Schrauben 14b, die den Gehäusekörper 4 klemmend halten. Nach Lösen der Schrauben 14b kann der rohrförmige Gehäusekörper 4 von dem ringförmige Gehäusekörper 1 abgezogen werden.

Das untere Teilstück 4a des rohrförmigen Gehäusekörpers 4 ist als Ansaugstutzen ausgebildet, vor dem die rotierende Schneidklinge 2 konzentrisch angeordnet ist. Das obere Teilstück des rohrförmigen Gehäusekörpers 4b ist als Anschlußstutzen ausgebildet, auf den der Verbindungsschlauch 5 passend aufsteckbar ist.

Der Ansaugstutzen 4a weist in Strömungsrichtung hinter dem Schneidwerkzeug 2 eine Querschnittsverengung 15 auf. Der Querschnitt des rohrförmigen Gehäusekörpers 4 ist im Bereich der Querschnittsverengung um etwa 40 bis 60 % verringert. Dadurch wird eine Art Ansaugdüse mit einem Saugkanal 16 geschaffen, die zu einer Erhöhung der Strömungsgeschwindigkeit führt. Zur Vermeidung des Festsaugens der Vorrichtung sind in dem rohrförmigen Gehäusekörper 4 vorzugsweise zwei Bohrungen 18 mit einem Durchmesser von maximal 3 mm vorgesehen.

Zum Entfernen von BSE-Risikomaterial wird die Vorrichtung mit dem rotierenden Schneidwerkzeug 2 von oben entlang des Rückenmarkkanals nach unten geführt, wobei von der Schneidklinge 2c bereits gelöstes, aber noch nicht abgetrenntes Risikomaterial aufgrund des hohen Unterdrucks in Folge der Querschnittsverringerung angesaugt wird. Das von dem Schlachttierkörper noch nicht vollständig abgetrennte Risikomaterial wird quasi in das Schneidwerkezug bzw. den Ansaugstutzen hineingezogen. Während die Vorrichtung entlang des Rückenmarkkanals bewegt wird, erfaßt die Schneidklinge das sich in den Hohlkörper 2a des Schneidewerkzeugs 2 und den Saugkanal 16 erstreckende Risikomaterial, so daß das Material vollständig von dem Schlachttierkörper abgetrennt wird. Das vollständig abgetrennte Risikomaterial wird dann über den Verbindungsschlauch 5 in die Absaugeinrichtung 6 abgesaugt. In der Absaugeinrichtung wird das Risikomaterial in einem Behälter gesammelt und später entsorgt.

## Patentansprüche

1. Vorrichtung zum Entfernen von BSE-Risikomaterial, insbesondere des Rückenmarkkerns und der Rückenmarkhaut aus dem Rückenmarkkanal von Schlachttierkörpern, mit einem motorisch angetriebenen Schneidwerkzeug (2), das in einem Gehäuse drehbar gelagert ist, wobei in dem Gehäuse ein Saugkanal (16) ausgebildet ist, an den eine Unterdruck erzeugende Absaugeinrichtung anschließbar ist, **dadurch gekennzeichnet, daß** der Saugkanal (16) derart ausgebildet ist, daß von dem Schlachttierkörper gelöstes BSE-Risikomaterial erst in den Saugkanal ansaugbar ist, bevor das Risikomaterial mit dem Schneidwerkzeug (2) von dem Schlachttierkörper vollständig abtrennbar und über den Saugkanal absaugbar ist.

2. Vorrichtung nach Anspruch 1, **dadurch gekennzeichnet, daß** der Saugkanal (16) zur Erhöhung des Unterdrucks eine Querschnittsverringerung (15) aufweist.

3. Vorrichtung nach Anspruch 1 oder 2, **dadurch gekennzeichnet, daß** das Schneidwerkzeug (2) einen konischen Hohlkörper (2a) mit einer ringförmigen Schneidklinge (2c) ist.

4. Vorrichtung nach einem der Ansprüche 1 bis 3, **dadurch gekennzeichnet, daß** das Gehäuse einen Ansaugstutzen (4a), in dem der Saugkanal (16) ausgebildet ist, und einen Anschlußstutzen (4b) zum Anschluß eines Verbindungsschlauchs für die Absaugeinrichtung aufweist.

5. Vorrichtung nach Anspruch 4, **dadurch gekennzeichnet, daß** das Gehäuse einen ringförmigen Gehäusekörper (1), in dem das Schneidwerkzeug (2) drehbar gelagert ist, und einen rohrförmigen Gehäusekörper (4) aufweist, der als Ansaug- und Anschlußstutzen (4a, 4b) ausgebildet ist.

6. Vorrichtung nach Anspruch 5, **dadurch gekennzeichnet, daß** die Querschnittsverringerung (15) in dem rohrförmigen Körper (4) in Strömungsrichtung hinter dem Schneidwerkzeug (2) ausgebildet ist.

7. Vorrichtung nach Anspruch 5 oder 6, **dadurch gekennzeichnet, daß** der rohrförmige Gehäusekörper (4) in den ringförmigen Gehäusekörper (2) eingesetzt ist.

8. Vorrichtung nach Anspruch 7, **dadurch gekennzeichnet, daß** der rohrförmige Gehäusekörper (4) mittels Befestigungselementen (14) in dem ringförmigen Gehäusekörper (1) lösbar fixiert ist.

9. Anordnung zum Entfernen von BSE-Risikomaterial, insbesondere des Rückenmarkkerns und der Rückenmarkhaut aus dem Rückenmarkkanal von Schlachttierkörpern, mit einer Vorrichtung nach einem der Ansprüche 1 bis 8 und einer Absaugeinrichtung (6) zur Erzeugung eines Unterdrucks.

10. Verfahren zum Entfernen von BSE-Risikomaterial, insbesondere des Rückenmarkkerns und der Rückenmarkhaut aus dem Rückenmarkkanal von Schlachttierkörpern, **dadurch gekennzeichnet, daß** von den Schlachttierkörpern gelöstes BSE-Risikomaterial erst angesaugt wird, bevor das Risikomaterial mit einem Schneidwerkzeug von dem Schlachttierkörper vollständig abgetrennt und abgesaugt wird.

11. Verfahren nach Anspruch 10, **dadurch gekennzeichnet, daß** das BSE-Risikomaterial in einen Saugkanal angesaugt und mit einem Schneidwerkzeug abgetrennt wird, das eine ringförmige Schneidklinge aufweist.

12. Verfahren nach Anspruch 11, **dadurch gekennzeichnet, daß** das Schneidwerkzeug einen konischen Hohlkörper aufweist, an dem die ringförmige Schneidklinge vorgesehen ist.
